# EUROPEAN PATENT SPECIFICATION

(11) **EP 1 248 902 B1**
(45) Date of publication and mention of the grant of the patent: **13.04.2005**
(21) Application number: 01926336.7
(22) Date of filing: 19.01.2001
(51) Int. Cl.: F02K 9/97

(54) **ROCKET MOTOR NOZZLE ASSEMBLY COMPRISING A REFRACTORY METAL SHELL**
RAKETENDÜSE MIT HOCHTEMPERATURFESTEM SCHUTZSCHILD
ASSEMBLAGE DE TUYERE DE MOTEUR-FUSEE COMPORTANT UNE GAINE METALLIQUE REFRACTAIRE

(30) Priority: 21.01.2000 US 177218 P
(43) Date of publication of application: 16.10.2002
(73) Proprietor: ALLIANT TECHSYSTEMS INC., Hopkins, MN 55343 (US)
(72) Inventor: CANFIELD, Alan, R., South Ogden, UT 84403 (US); SHIGLEY, John, K., Ogden, UT 84403 (US)
(74) Representative: Stuttard, Garry Philip
(86) International application number: PCT/US2001/001930
(87) International publication number: WO 2001/053683

(56) References cited:
- US-A- 3 139 672
- US-A- 3 265 314
- US-A- 3 441 217

## Description

### RELATED APPLICATION

The benefit of priority is claimed based on U.S. Provisional Application 60/177,218 filed in the U.S. Patent & Trademark Office on January 21, 2000, the complete disclosure of which is incorporated herein by reference.

### BACKGROUND OF THE INVENTION

### 1. Field of the Invention

This invention relates to a rocket motor nozzle assembly having a throat insert that includes a vacuum plasma-sprayed refractory metallic component for preventing the throat from receding, and an ablative component constructed and arranged to reduce erosion under the refractory metallic component. This invention also relates to a rocket motor engine assembly comprising the nozzle, and to methods of making the rocket motor nozzle assembly and engine assembly.

### 2. Description of the Related Art

Conventionally, solid rocket motor propellants contain, among other things, oxidizer and fuel components immobilized within a polymeric binder. The solid propellant is cast as a grain within a rigid outer casing or shell of the rocket motor combustion chamber. A heat insulating layer and a liner are usually interposed between the grain and the outer casing to protect the outer casing from the high operating temperatures associated with rocket motor operation and to provide enhanced grain-to-case bonding. The solid-propellant grain is typically configured as either a center perforated grain or an end burner grain.

During firing, the oxidizing agents immobilized within the solid-propellant grain drive combustion reactions to form large quantities of combustion products, which are expelled from the rocket motor through a nozzle in fluid communication with the combustion chamber. The amount of thrust produced by a rocket motor is proportional to the exit gas velocity squared. Nozzles are designed to accelerate the combustion product gases from the propellant grain to the maximum velocity at the exit.

To achieve this end, nozzles usually have forward walls converging to a throat region and have aft walls diverging from the throat region to a larger exit area to form a converging/-diverging nozzle configuration. The nature of compressible gases is such that a converging/-diverging nozzle increases the exit gas velocity and thereby thrust. The proportions of the mass flow pathway, particularly the ratio of area at the exit plane to area at the throat, establish how efficiently the nozzle converts pressure in the mass flow stream to thrust produced by the motor. It is within the purview of those skilled in the art to design a nozzle throat to optimize the ratio of exit area to throat area.

As described above, an insulating layer and liner are typically placed between the propellant and the outer casing of the combustion chamber to protect the outer casing from the extremely high temperatures at which the rocket motor operates. Likewise, the nozzle throat must also be designed to withstand the elevated temperatures and pressures, reactions with the combustion products, and the high velocities at which the combustion products pass over the nozzle inner surface.

Carbon-based and silica-based materials are highly advantageous for use as nozzle insulation due to their excellent ablative properties, inexpensive cost, and relatively low weight. Intuitively, a lesser weight nozzle assembly is desirable because a lesser weight nozzle assembly imparts a lesser weight penalty to the rocket motor than a heavier nozzle assembly, thereby increasing the distance the rocket motor assembly can travel. As referred to herein, carbon-based and silica-based materials include, but are not limited to, carbon, silica, or graphite bulk and composite materials with constituents previously subject to carbonization or graphitization, known as carbon/carbon, graphite/carbon, and cloth, fiber, or powder-filled phenolic composites, and also a large array of metal or silicon carbides.

It is widely acknowledged in the industry, however, that carbon- and silica-based nozzle throats tend to recede, especially at high operating temperatures and pressures. The material loss in the nozzle throat is generally attributed to one or more mechanisms. For example, in the case of silica-cloth phenolics and the like, material loss is attributed to thermal decomposition and melting of the liner material, which can cause the decomposed layer to be sheared off by the high-velocity gas stream. In the case of carbon cloth phenolics and the like, material loss can result from the thermal decomposition of the liner material, which forms pyrolysis gas and char due to chemical reactions of the decomposed material (char) with the combustion gases. Typical carbon-carbon materials and the like may undergo chemical reaction with the reactive species in the combustion products.

The recession of the nozzle throat inner surface during motor operation is a source of several problems in rocket operation. As the nozzle throat material recedes, the exit area to throat area ratio (or expansion ratio) diminishes, thereby decreasing the efficiency of the nozzle and causing loss in motor performance. Additionally, rough nozzle surfaces, which tend to form during nozzle recession, have been shown to undergo recession at faster rates than smooth surfaces. Thus, the nozzle throat recession process can be characterized as a self-perpetuating phenomenon. Another problem is having higher than predicted nozzle recession. Calculations for determining payload weight and corresponding motor designs must be accurate to ensure that the payload will reach its intended target. The calculations necessary for ascertaining rocket dimensions and payloads are dependent upon many variables, including nozzle throat diameter. In-flight variations of nozzle throat diameter due to recession can reduce motor performance.

To address the shortcomings of carbon-and silica-based nozzle throats, refractory metal and metal alloys are occasionally used in rocket motors, especially as the throat insert. Examples of such refractory materials are tungsten and its alloys.

However, the weight penalty and expense associated with the presence of the tungsten and other refractory metals often make these refractory materials impractical and uneconomical for applications involving bulky throat insert cross sections. Additionally, refractory metals exposed to hot combustion exhaust gases and particles are subject to tensile stresses due to thermal shock early in motor burn when thermal expansions near the rapidly heated exposed surfaces are restrained by cooler regions of the cross section farther from the exposed surfaces. Indeed, surface heating can be so intense that temperature gradients of thousands of degrees per inch are possible. Such thermal stresses in both the axial and tangential (or hoop) directions can produce thermal fractures in the nozzle component, and potential ejection of the throat insert from the motor.

US-A-3441217 discloses a nozzle assembly having a diverging/converging pathway with a refractory material insert bonded to the nozzle interior and a thin sheet of refractory metal disposed in the insert.

It would, therefore, be a significant advancement in the art to provide a nozzle assembly that takes advantage of the low weight of carbon-and/or silica-based materials and the erosion resistance of metals and alloys, yet avoids significant nozzle recession experienced by carbon-and silica-based materials and reduces the risks associated with thermal stresses encountered by thick refractory materials, even when the operating conditions are characterized by high temperatures and pressures.

It is, therefore, an object of this invention to realize the above-discussed advancement in the art. In accordance with the principles of this invention, this and other objects are attained by the provision of a rocket motor nozzle assembly defining a converging/diverging pathway with a throat of restricted cross-sectional area and operatively engageable with a rocket motor to receive the combustion products of the rocket motor, pass the combustion products through the converging/diverging pathway, and discharge the combustion products to propel and/or divert said rocket motor assembly.

Thus viewed from a first aspect the present invention provides a nozzle assembly having a converging/diverging pathway with a throat and an exit region, said nozzle assembly being operatively engageable to a rocket motor case to receive high temperature combustion products generated in the rocket motor case upon ignition of propellant loaded in the rocket motor case and to pass the combustion products through the throat before the combustion products are discharged from said ext region, said nozzle assembly comprising:
(i) an annual throat insert comprising an annular throat support and an annular shell positioned radially inside said throat support, said throat support comprising at least one carbon-based material and having a forward face or edge, a radially inner converging portion that converges into a minimum cross-sectional area portion at said throat, and a radially inner diverging portion aft of said minimum cross-sectional area portion;
(ii) said shell comprising at least one refractory metal or refractory metal alloy having:
   (a) a forward surface region covering at least a portion of said converging portion of said throat support;
   (b) a throat surface region covering said minimum cross-sectional area portion of said throat support, said throat surface region defining said throat and exposed along said converging/diverging pathway; and
   (c) an aft surface region covering at least a portion of said diverging portion of said throat support;
(iii) a protective eyelid comprising at least one member selected from the group consisting of a carbon-based material and a silica-based material, said protective eyelid covering said forward face or edge of said throat support to prevent the combustion products passing along the converging/diverging pathway from reaching a radially outer surface of said throat insert, yet said protective eyelid not covering said throat surface region of said shell so that said throat surface region of said shell remains exposed to the combustion products passing along the converging/diverging pathway during operation of a rocket motor assembly associated in use with the nozzle assembly; and
(iv) an aft skirt configured as a truncated cone, said aft skirt extending aftwardly from said throat insert.

In accordance with an embodiment of this invention, the rocket motor nozzle assembly comprises a throat insert comprising a carbon-based throat support and a vacuum plasma-sprayed metal shell comprising at least one refractory metal and/or refractory metal alloy having a melting temperature above 2700°C, preferably above 2760°C. The assembly further comprises a carbon-or silica-based protective liner (also referred to herein as an "eyelid") covering a forward face of the throat insert, and an aft skirt configured as a diverging truncated cone and extending aftwardly from the throat insert. Generally, the throat support is annular and has a forward face or edge, a radially inner converging portion that converges into a minimum cross-sectional area portion of the throat, and a radially inner diverging portion aft of the throat. The shell is also annular and is positioned radially inside the throat support to cover at least a portion, and optionally all of the radially inner surface of the throat support. In particular, the shell comprises a forward radially inner surface region covering the converging portion of the throat support, a throat surface region covering the minimum cross-sectional area portion of the throat support and exposed along the converging/diverging pathway, and an aft radially inner surface region covering the diverging portion of the throat support.

In this embodiment, the carbon-or silica-based protective eyelid covers a sufficient portion of the forward surface region of the shell and the underlying converging portion of the throat support to protect these components against particle impingement and erosion. The carbon-or silica-based protective eyelid extends sufficiently far forward along the converging/diverging pathway to cover and protect the forward face or edge of the throat insert and prevent the combustion gases from passing under the throat insert and reaching the radially outer surface of the throat insert. Protection of this radially outer surface of the throat insert from combustion gases is necessary to eliminate the risk of nozzle failure that might otherwise occur if combustion gases were to reach underneath the throat insert. However, in accordance with the principles of this invention, the protective eyelid does not cover the throat surface region of the shell, thereby leaving the throat surface region of the shell exposed to the converging/diverging pathway. Since the refractory metal shell is much less susceptible to erosion than the carbon- or silica-based material forming the eyelid, the throat area, which is defined by the refractory shell, is less likely to recede and thereby diminish the exit area to throat area ratio (or expansion ratio) of the nozzle.

Viewed from a further aspect the present invention provides a rocket motor assembly comprising:
(A) a rocket motor case comprising a combustion chamber and at least one propellant that is ignitable to generate high temperature combustion products; and
(B) a nozzle assembly having a converging/diverging pathway with a throat and an exit region, said nozzle assembly being operatively engageable with said rocket motor case to receive the combustion products generated from the propellant and to pass the combustion products through the converging/diverging pathway before the combustion products are discharged from said exit region to propel and/or divert said rocket motor assembly, said nozzle assembly comprising:
   (i) an annular throat insert comprising an annular throat support and an annular shell positioned radially inside said throat support, said support comprising at least one carbon-based material and having a forward face or edge, a radially inner converging portion that converges into a minimum cross-sectional area portion at said throat, and a radially inner diverging portion aft of said minimum cross-sectional area portion;
   (ii) said annular shell comprising at least one refractory metal or refractory metal alloy and comprising:
      (a) a forward surface region covering at least a portion of said converging portion of said throat support;
      (b) said throat surface region covering said minimum cross-sectional area portion of said throat support, said throat surface region defining said throat and exposed along said converging/diverging pathway; and
      (c) an aft surface region covering at least a portion of said diverging portion of said throat support;
   (iii) a protective eyelid comprising at least one member selected from the group consisting of a carbon-based material and a silica-based material, said protective eyelid covering a sufficient portion of said forward surface region of said shell to insulate said shell and prevent the combustion products passing along the converging/diverging pathway from reaching a radially outer surface of said throat insert, yet said protective eyelid not covering said throat surface region of said shell so that said throat surface region of said shell remains exposed to the combustion products passing along the converging/diverging pathway during operation of the rocket motor assembly; and
   (iv) an aft skirt configured as a diverging truncated cone, said aft skirt extending aftwardly from said throat insert.

Viewed from a yet further aspect the present invention provides a method of making rocket motor assembly having a converging/diverging pathway with a throat and an exit region, said nozzle assembly being operatively engageable to a rocket motor case to receive high temperature combustion products generated in the rocket motor case upon ignition of propellant loaded in the rocket motor case and to pass the combustion products through the throat before the combustion products are discharged from said region, said method comprising:
(A) forming an annular shell by plasma spraying at least one refractory metal or refractory metal alloy; and
(B) forming a rocket motor nozzle comprising:
   (i) an annular throat insert comprising an annular throat support and the shell, said throat support comprising at least one carbon-based material and having a forward face or edge, a radially inner converging portion that converges into a minimum cross-sectional area portion at the throat, and a radially inner diverging portion aft of the minimum cross-sectional area portion;
   (ii) the shell positioned radially inside the throat support and comprising:
      (a) a forward surface region covering at least one portion of the converging portion of the throat support;
      (b) the throat surface region covering the minimum cross-sectional area portion of the throat support, the throat surface region defining the throat and exposed along the converging/diverging pathway; and
      (c) an aft surface region covering at least a portion of the diverging portion of the throat support;
   (iii) a protective eyelid comprising at least one member selected from the group consisting of a carbon-based material and a silica-based material, the protective eyelid covering a sufficient portion of the forward surface region of the shell to insulate the shell and cover the forward face or edge of the throat support to prevent the combustion products passing along the converging/diverging pathway from reaching a radially outer surface of the throat insert, yet the protective eyelid not covering the throat surface region of the shell so that the throat surface region of the shell remains exposed to the combustion products passing along the converging/diverging pathway during operation of a rocket motor assembly associated in use with the nozzle assembly; and
   (iv) an aft skirt configured as a diverging truncated cone, the aft skirt extending aftwardly from the throat insert.

These and other objects, features, and advantages of the present invention will become apparent from the following detailed description of the invention when taken in conjunction with the accompanying drawings which illustrate, by way of example, the principles of this invention.

The accompanying drawings serve to elucidate the principles of this invention. In such drawings:
FIG. 1 is a sectional view of a rocket motor nozzle assembly according to an embodiment of this invention; and
FIG. 2 is a sectioned view of a rocket motor assembly comprising a rocket motor case loaded with a solid propellant and the rocket motor nozzle assembly of FIG. 1.

### DETAILED DESCRIPTION OF THE INVENTION

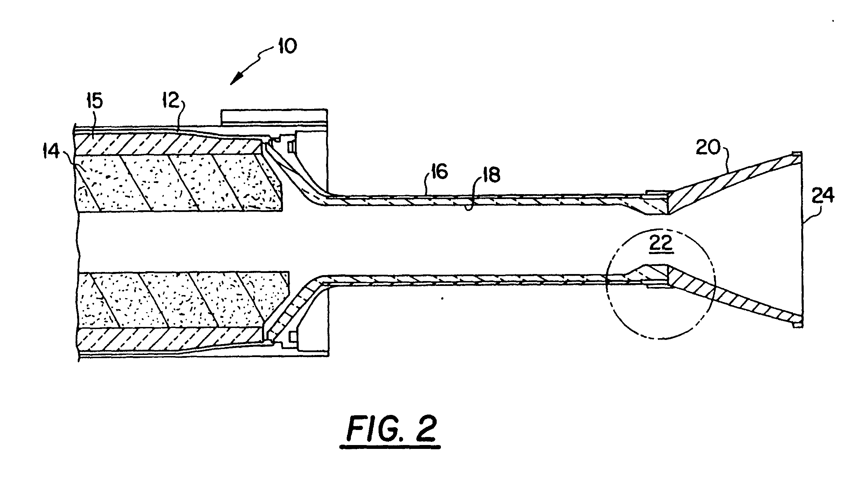

The general structure of a rocket motor engine is shown in FIG. 2, in which the engine is generally designated by reference numeral 10. The illustrated rocket motor engine 10 includes a case 12 in which a rocket motor propellant 14 is housed, a nozzle assembly 20, and a blast tube 16 connecting the case 12 to the nozzle assembly 20. In the illustrated embodiment, the propellant 14 is in the form of a solid propellant grain 14. As shown in FIG. 2, the case 12 and the propellant grain 14 commonly are separated by an insulation layer 15, as well as a liner (not shown). Similarly, the blast tube may also be lined with insulation, such as depicted in FIG. 2 and designated by reference numeral 18. The insulation 15 and the liner (not shown) serve to protect the case 12 from the extreme conditions produced by the propellant 14 as the propellant 14 undergoes combustion reactions and is exhausted through exit region 24 of the nozzle assembly 20. The liner serves the additional functions of bonding the propellant 14 to the insulation 15 and the case 12, and creating a seal to prevent the penetration of hot combustion gases to the case 12. Methods for loading the propellant 14 in the rocket motor case 12, such as by conventional casting and curing techniques, are well known to those skilled in the art, such that the skilled artisan can readily practice such techniques with this invention without undue experimentation. Methods of insulating and lining the case 12 are also well known in the art.

Although the illustrated embodiment is of a blast tube solid rocket motor nozzle, it is to be understood that the nozzle assembly of this invention can be applied to various other types of rocket motors that are mounted to or closer to the case 12, and that do not contain a blast tube 16. The principles of this invention can also be applied to hybrid systems and liquid oxidizer/liquid fuel systems (engines).

The illustrated nozzle 20 defines a converging/diverging pathway having a throat of restricted cross-sectional area. The throat is generally designated by reference numeral 22. During operation of the rocket motor engine 10, combustion products, including hot exhaust gases, are generated by the rocket motor engine 10 and passed through the blast tube 16 and the throat 22. As the hot combustion products pass through the throat 22, exit velocity of the combustion gases is increased to thereby increase thrust.

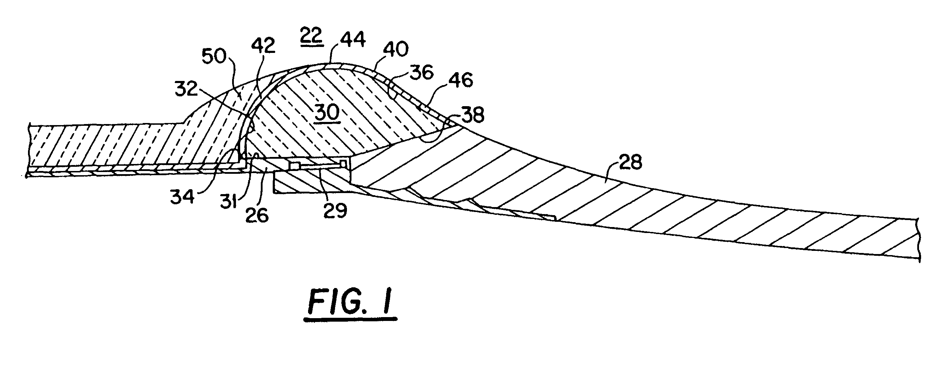

Referring now more particularly to FIG. 1, the throat 22 is generally defined by an annular throat insert that comprises an annular throat support 30 and an annular shell 40. The shell 40 is positioned radially inside of the throat support 30 to cover at least a substantial portion of the radially inner surface of the throat support 30. The throat support 30 is made of one or more carbon-based materials, exemplary compositions of which are described in much greater detail below. The throat insert is annular in shape, and has a substantially flat outer surface 31 that seats against outer support shell 26, which is typically made of a metal. The radially inner surface of the throat support 30 includes a forward converging portion 32 that extends from a forward edge (or face) 34 of the throat support 30 to a minimum cross-sectional area portion at the throat 22. In the illustrated embodiment, the forward converging portion 32 curves towards the outer diameter of the rocket motor nozzle 20 for achieving better retention of the throat support 30. Aft of the throat 22, the inner surface of the throat support 30 expands along a diverging portion 36.

Extending aftwardly from aft end surface 38 of the diverging portion 36 of the throat insert is an aft skirt 28 configured as a diverging truncated cone. The aft skirt 28 and aft end surface 38 abut one another and can be connected by any conventional technique, including epoxy adhesives, other adhesives, and/or mechanical fastening means. The aft end surface 38 is machined at an angle relative to the aft skirt 28 to enhance the retention of the throat insert against high internal pressures. The aft skirt 28 is supported by outer support shell 26, which (although not shown) may coextend along the entire length of the aft skirt 28. The aft skirt 28 engages the outer support shell 26 via screw threads 29.

The shell 40 covering the throat support 30 is made of one or more refractory metals and/or alloys having melting temperatures above 2700°C (4918°F), preferably above 2760°C (5000°F), more preferably above 3040°C (5500°F). Such refractory materials include tungsten, rhenium, tantalum, and alloys containing one or more of these refractory metals. Although tungsten is the preferred refractory metal, tungsten is still more preferably used as an alloy with rhenium, which improves ductility. Preferably, the alloy is 75-95 wt% tungsten, with the balance (5-25 wt%) rhenium. The thickness of the shell 40 is generally dependent upon the size of the nozzle employed. For smaller nozzle having a throat of about 12.7 cm (5 inches). the shell 40 thickness can be in a range of from about 0.1 cm (40 mils) to about 0.15 cm (60 mils). For larger nozzles, the shell 40 thickness can be generally as large as about 0.3 cm (1/8 inch). Generally, the shell 40 thickness may be selected within or outside of these ranges, so long as the selected thickness does not result in undue amounts of thermal stress that significantly risk nozzle failure. The thermal stresses encountered by thermal expansion of the shell 40 are also mitigated by the throat support 30, which is formed of carbon-based materials that decompose/char during motor operation. The refractory metal shell 40 is able to expand more easily into the throat support 30 once the support 30 has undergone decomposition/charring.

In the illustrated embodiment, the annular shell 40 has a forward surface region 42 covering the entire forward converging portion 32 of the throat support 30. It is to be understood, however, that the forward surface region 42 of the shell 40 need only extend over the entire forward converging portion 32, i.e., the forward surface region 42 does not have to extend all the way to the forward edge 34 of the throat support 30. Formed contiguously and integrally with the forward surface region 42 is a throat surface region 44 of the shell 40. Similarly, an aft surface region 46 of the shell 40 is formed contiguously and integrally with the throat surface region 44. Although in the illustrated embodiment the aft surface region 46 covers the diverging portion 36 of the throat support 30 in its entirety, it is to be understood that the aft surface region 46 is not required to extend to the aft end surface 38 of the throat support 30. However, the aft surface region 46 should extend sufficiently far along the diverging portion 36 of the throat support 30 to eliminate step-down erosion or at least reduce step-down erosion to non-appreciable levels. Step-down erosion will reduce motor thrust and should be minimized.

The throat surface region 44 defines the throat area 22 of minimum cross section. In this manner, the throat surface region 44 is left exposed to hot combustion products passing through the nozzle 20 pathway during firing of the motor. Exposing the refractory metal of the shell 40, and in particular the refractory metal of the throat surface region 44 of the shell 40, at the throat 22 is an important feature of this invention. Refractory metals are much more resistant to step erosion than carbon-based materials. By defining the throat area 22 with the refractory shell 40, and not covering the throat surface region 44 of the shell 40 with carbon- or silica-based materials, the throat 22 remains substantially constant in cross-sectional area throughout engine operation because the refractory metal of the throat surface region 44 is not significantly eroded. As a consequence, improvements in performance and predictability of the rocket motor 10 can be realized.

The forward surface region 42 of the shell 40 engages in abutting relationship insulation 18 of the blast tube 16. (Alternatively, in the event that the forward surface region 42 does not extend to the forward edge 34 of the throat support 30, thus leaving part of the forward converging portion 32 uncovered, then the insulation 26 would abut against the uncovered part of the forward converging portion 32 of the throat support 30.)

Covering the forward surface region 42 of the shell 40 and the forward converging portion 32 of the throat support 30 is an annular protective liner 50, which in the cross-sectional view of FIG. 1 has the general appearance of an eyelid. The protective liner 50 is formed from one or more carbon-based and/or silica-based ablative materials, which may be the same or different from the material from which the throat support 30 is made. The protective liner 50 extends sufficiently far forward towards the insulation 18 to cover the forward edge 34 of the throat insert, so as to prevent combustion products passing along the converging/diverging pathway during operation of the rocket motor from passing under (radially outward from) the forward edge 34 and reaching between the throat insert and the outer support shell 26. The protective liner 50 also extends over the entire forward surface region 42 and forward converging portion 32 to protect these components from particle impingement and heating and to provide some combination of boundary layer enhancement and/or transpiration cooling to the refractory shell 40. Because the protective liner 50 is made of a carbon-based and/or silica-based material that recedes during operation of the rocket motor, the protective liner 50 is preferably of sufficient thickness that the liner 50 is not completely eroded away during engine operation. It is to be understood that although the protective liner 50 is illustrated as extending over the entire forward surface region 42 of the liner 40, the protective liner 50 may extend only partway along the forward surface region 42.

Importantly, the protective liner 50 does not cover the throat surface region 44, which is made of a refractory material that is less susceptible to erosion than the protective liner 50. As a consequence, the throat 22 is defined by the refractory metals/alloys of the throat surface region 44 of the shell 40. Therefore, the throat 22 is less prone to erosion from the combustion products passing along the converging/diverging pathway 22 during operation of the rocket motor engine.

The production of the rocket motor nozzle of this invention will now be described in more detail below. Although various techniques can be used to make the refractory shell 40, preferred for this invention is a vacuum plasma spraying technique, which involves spraying material onto a mandrel of the desired shape and subsequently removing the mandrel. The plasma is formed by passing gases such as argon and/or hydrogen through an electric arc positioned between an anode and cathode. The gas passing through the electric arc is ionized and generates temperatures on the order of 16,650°C (30,000°F). Refractory metal powder is entrained in a gas carrier, such as argon gas, and injected from a gun into the hot plasma. The powder is melted by the plasma and accelerated towards the surface of mandrel. If appropriate, the mandrel may be rotated during spraying. Advantages of the vacuum plasma spraying technique include the ability to form near-net-shape components that do not require laborious machining.

Various techniques known in the art can be practiced to form the nozzle support 30 about the radially outer surface of the refractory shell 40, as well as to form the protective liner 50 and the aft skirt 28. One highly advantageous technique is described in detail below.

In general, the refractory shell 40 can be insulated with the carbon-based throat support 30 by arranging a curable pre-preg around the outer surface of the refractory shell 40 at a level of compaction sufficiently low to permit voids to be generated therein during subsequent curing of the pre-preg, then curing the prepreg at a pressure sufficiently low to permit evolving gases to form voids in the pre-preg as the pre-preg cures to form the throat support 30. Generally, the pressure at which the pre-preg is cured is maintained at not more than about 150 psig.

The prepreg can be arranged by winding a pre-preg tape or applying a pre-preg cloth about the refractory shell 40. For example, the pre-preg tape can be applied using a tape wrap process in which the pre-preg tape is heated, such as by a hot air source, to soften the tape. The hot air can be supplied to the tape at a temperature in the range of about 177°C (350°F) to about 482°C (900°F), more typically in the range of about 177°C (350°F) to 288°C (550°F). The tape may be debulked as it wraps onto the refractory shell 40, for example, by setting a roller in close proximity to the refractory shell 40. In general, the tapes may be debulked less than 80%, more particularly less than about 50%. To accomplish this debulking, the pressure applied by the roller and the refractory shell 40 is generally less than about half (50%) of the lowest pressure recommended by pre-preg vendors (100 to 300 pounds per inch of tape width) and about 50 pounds per inch of tape width is exemplary of such a lower pressure. The tape is cooled and preferably hardened as the tape is wrapped about the refractory shell 40. Carbon dioxide (or other coolant) from a liquid holding tank can be applied to the wrapped tape as the tape wraps about the refractory shell 40. This cools and hardens the wrapped tape about the refractory shell 40 whereby the throat support 30 is formed.

During curing, the pressure can be vacuum or up to less than about atmospheric pressure. In accordance with one embodiment of the present invention, the wrapped throat support 30 and refractory shell 40 can be vacuum bagged using a vapor impermeable vacuum bag, such as a nylon vacuum bag, sealed with vacuum putty. In the vacuum bagging procedure, a suitably thick or suitably layered bleeder material is used so that any resin bleed from the curing material does not clog vacuum lines or to avoid (if not minimize) adversely affect the vacuum bag itself. In this regard, a bleeder material may comprise, for instance, at least one layer of perforated film; at least two layers of cotton mop; or at least two layers of bleeder material, such as a polyester bleeder material (about 10 oz or about 16 oz./sq. yard of polyester bleeder material). The vacuum bagged material is then cured using a selected maximum vacuum. By preference, the vacuum provides the only pressure applied during the curing, and low pressures on the order of sub-atmospheric up to about, preferably less than, atmospheric can be used, such as a vacuum equivalent of about 12.5 psia to less than about 14.7 psia, although the pressure selected will depend on the prevalent atmospheric pressure. Still lower pressures can also be used. In general, however, the low pressure vacuum can, for instance, be in a range of from about 12.5 psia to about 14 psia, and more particularly in a range of from about 12.5 psia to about 12.7 psia. The cure pressure is adjusted to maintain or provide the desired cured component density.

During the curing step, it is possible to use thermal cycling to cure the pre-preg. In the temperature cycling, various temperatures or temperatures and residence times are selected to ensure the satisfactory curing of the composite article. An exemplary temperature cycle involves heating and cooling the pre-preg at a rate of about 0.55°C (1°F) per minute. Alternatively, a multi-stage temperature cycle can be used. For instance, the thermal cycling can be programmed to have a first hold at about 82°C (180°F) for a residence time of about 1.25-1.5 hours, a second hold at about 104°C (220°F) for a comparable residence time as the first hold, and a third hold at a temperature in a range of from about 154°C (310°F) to about 160°C (320°F) for about 60 or more minutes for each inch of component wall thickness. The residence time at a holding temperature will be a function of process variables, such as the thickness of the material to be cured. The determination of suitable curing cyclings, including both residence times and cure temperatures, is within the purview of those skilled in the art and can be determined without undue experimentation.

Suitable carbon-based pre-preg materials are generally characterized by a reinforcement (fibers, cloth, tape) to which is impregnated with a thermosetting resin. Suitable reinforcement can comprise wide variety of fibers or filaments (whether continuous or staple) known in the art. These fibers and filaments include, but are not limited to, glass fibers, boron filaments, boron nitride, silicon carbide, graphite (carbon) filaments and high modulus organic filaments, particularly organic filaments of the nylon, polyethylene, and aramid type. Examples of high modulus organic filaments include, but are not limited to, poly(benzothiazoles) and poly(aromatic amides) which are commonly referred to simply as "aramids". Aramids include poly (benzamides) and family of materials sold by E. I. DuPont under the trademark KEVLAR. As an example of carbon filaments useful in this invention, there may be mentioned, for example, Amoco Performance Product's T-300 and Toray's T-800H and T-1000G carbon fibers. Suitable carbon-based thermosetting resins include, for example, phenolic resins, and epoxy resins (especially those based on diglycidyl ethers of bisphenol A are employed). In principle, bis-maleimide resins, polyurethanes, polyesters, and the like, and any combination thereof may also be employed as the carbon-base resin or a component thereof. By preference, for the composite materials requiring erosion resistance, good ablative performance, and good across ply tensile strength required for rocket nozzle components, a phenolic resin matrix resin for the pre-preg is used. Suitable commercially available curable phenolic resins are SC-I008 (Borden) and 91-LD phenolic resin (Stuart - Ironsides). Epoxy-based pre-pregs are not preferred for rocket motor nozzle components.

A carbon cloth impregnated with a curable phenolic resin can also be used. The carbon cloth can be rayon-based, polyacrylonitrile (PAN) based, or pitch-based. These types of pre-pregs include the industry standard density pre-pregs such as MX-4926 (28-38% resin, 8-16% filler, the remainder including cloth reinforcement) which is a rayon based carbon phenolic pre-preg from Fiberite. Other suitable materials from Fiberite include PAN-based pre-pregs, such as those sold under the designations MX-4946 or MX-4920 which both used a T300 fiber/yarn which is a vendor designation for a yarn having a modulus of 300 million. Other "T" type fiber/yarn products can be used. These materials can include a filler, and generally include carbon powder filler. Graphite cloth phenolics can be used. The graphite fiber can be rayon, PAN or pitch based. Suitable commercially available graphite pre-pregs include Fiberite products sold under the designations MXG-175 (graphite which is rayon based) and MX-4961 (graphite which is PAN based). Glass cloth pre-pregs include a glass fiber reinforced phenolic resin such as MXB-6001 from Fiberite. Silica fiber reinforced phenolic resin, such as a product from Fiberite known as MX-2600, can be used.

The pre-preg materials can, if desired, include filler materials. Suitable filler materials include silica, carbon powder and others known to those skilled in the art. Filler materials can serve more than one function. For instance, some fillers, including powdered alumina trihydrate or antimony oxide, may also provide some flame resistance, or other characteristics to the final cured products, but are nonetheless fillers. The present process does not require, and preferably avoids the use of hollow microspheres (and elastomers) in order to produce a low density composite article.

Although the present invention is not limited to production of the carbon-based insulation materials, including the protection liner, by the above-discussed technique, it is noted that this technique produces rocket nozzle components that exhibit remarkable erosion resistance and charring to similar high density products. This technique resides in forming and curing the insulation at sufficiently low pressures to permit the formation of volatiles that generate voids in the resulting product, without requiring low density fillers, such as hollow spheres ("microballons"). Generally, the cured articles prepared in accordance with this technique have a specific gravity which is lower than standard density composite rocket nozzle. For instance, with a suitable carbon phenolic resin based pre-preg, a lower density (SpG) in a range of about 1.00 (e.g. 1.03) to about 1.15 g/ml can be prepared, and for other pre-pregs, such as a silica cloth pre-preg, composite rocket nozzle components having densities (SpG) of about 1.35 to 1.49 can be fabricated. Further, the cured articles of the present invention also exhibit across ply tensile strengths which may be greater than, or at least near to, those observed with well-prepared composites from standard density pre-pregs. For instance, the composite rocket nozzles of our invention can have an across ply tensile strength of about 124,1 bars to about 206,8 bars (1800 to about 3000 psig), and more particularly can be readily prepared to have across ply tensile strengths of 124,1 bars to 151,7 bag (1800 to 2200 psig). Across ply properties of the composite material can be tailored by adjusting the pressure used in the initial compaction step and pressure used in the cure step. Such adjustments are techniques that, when viewed in reference to this disclosure, would be within the purview of the skilled artisan without undue experimentation.

Assembly of the nozzle components into the nozzle assembly 20 and engagement of the nozzle assembly 20 with the rocket motor are techniques familiar to skilled artisans.

The foregoing detailed description of the invention has been provided for the purpose of explaining the principles of the invention and its practical application, thereby enabling others skilled in the art to understand the invention for various embodiments and with various modifications as are suited to the particular use contemplated. This description is not intended to be exhaustive or to limit the invention to the precise embodiments disclosed. Modifications and equivalents will be apparent to practitioners skilled in this art and are encompassed within the scope of the appended claims.

## Claims

1. A nozzle assembly (20) having a converging/diverging pathway with a throat (22) and an exit region, said nozzle assembly being operatively engageable to a rocket motor case (12) to receive high temperature combustion products generated in the rocket motor case upon ignition of propellant (14) loaded in the rocket motor case and to pass the combustion products through the throat before the combustion products are discharged from said exit region, said nozzle assembly comprising:
(i) an annular throat insert comprising an annular throat support (30) and an annular shell (40) positioned radially inside said throat support, said throat support comprising at least one carbon-based material and having a forward face or edge (34), a radially inner converging portion (32) that converges into a minimum cross-sectional area portion at said throat, and a radially inner diverging portion (36) aft of said minimum cross-sectional area portion;
(ii) said shell comprising at least one refractory metal or refractory metal alloy having:
(a) a forward surface region (42) covering at least a portion of said converging portion of said throat support;
(b) a throat surface region (44) covering said minimum cross-sectional area portion of said throat support, said throat surface region defining said throat and exposed along said converging/diverging pathway; and
(c) an aft surface region (46) covering at least a portion of said diverging portion of said throat support;
(iii) a protective eyelid (50) comprising at least one member selected from the group consisting of a carbon-based material and a silica-based material, said protective eyelid covering said forward face or edge of said throat support to prevent the combustion products passing along the converging/diverging pathway from reaching a radially outer surface of said throat insert, yet said protective eyelid not covering said throat surface region of said shell so that said throat surface region of said shell remains exposed to the combustion products passing along the converging/diverging pathway during operation of a rocket motor assembly associated in use with the nozzle assembly; and
(iv) an aft skirt (28) configured as a diverging truncated cone, said aft skirt extending aftwardly from said throat insert.

2. The nozzle assembly of claim 1, wherein the refractory metal or refractory metal alloy has a melting temperature above 2760°C.

3. The nozzle assembly of claim I, wherein said shell (40) is formed by vacuum plasma spraying.

4. The nozzle assembly of claim 1, wherein said at least one refractory metal or refractory metal alloy comprises a member selected from the group consisting of tungsten, rhenium, tantalum, and alloys thereof.

5. The nozzle assembly of claim 1, wherein said at least one refractory metal or refractory metal alloy comprises a tungsten/rhenium alloy.

6. The nozzle assembly of claim I, wherein said shell (40) has a thickness of from 0.1cm to 0.3 cm.

7. The nozzle assembly of claim 1, wherein said forward surface region (42) covers all of said converging portion (32) of said throat support (30) and said aft surface region (46) covers all of said diverging portion (36) of said throat support (30).

8. The nozzle assembly of claim 1, wherein said protective eyelid (50) covers all of said forward surface region (42) of said shell (40).

9. A rocket motor assembly comprising:
(A) a rocket motor case (12) comprising a combustion chamber and at least one propellant (14) that is ignitable to generate high temperature combustion products; and
(B) a nozzle assembly(20) having a converging/diverging pathway with a throat (22) and an exit region, said nozzle assembly being operatively engageable with said rocket motor case to receive the combustion products generated from the propellant and to pass the combustion products through the converging/diverging pathway before the combustion products are discharged from said exit region to propel and/or divert said rocket motor assembly, said nozzle assembly comprising:
(i) an annular throat insert comprising an annular throat support (30) and an annular shell (40) positioned radially inside said throat support, said support comprising at least one carbon-based material and having a forward face or edge (34) a radially inner converging portion (32) that converges into a minimum cross-sectional area portion at said throat, and a radially inner diverging portion (36) aft of said minimum cross-sectional area portion;
(ii) said annular shell comprising at least one refractory metal or refractory metal alloy and comprising:
(a) a forward surface region (42) covering at least a portion of said converging portion of said throat support;
(b) said throat surface region (44) covering said minimum cross-sectional area portion of said throat support, said throat surface region defining said throat and exposed along said converging/diverging pathway; and
(c) an aft surface region (46) covering at least a portion of said diverging portion of said throat support;
(iii) a protective eyelid (50) comprising at least one member selected from the group consisting of a carbon-based material and a silica-based material, said protective eyelid covering a sufficient portion of said forward surface region of said shell to insulate said shell and prevent the combustion products passing along the converging/diverging pathway from reaching a radially outer surface of said throat insert, yet said protective eyelid not covering said throat surface region of said shell so that said throat surface region of said shell remains exposed to the combustion products passing along the converging/diverging pathway during operation of the rocket motor assembly; and
(iv) an aft skirt (28) configured as a diverging truncated cone, said aft skirt extending aftwardly from said throat insert

10. The rocket motor assembly of claim 9, wherein the refractory metal or refractory metal alloy has a melting temperature above 2760°C.

11. The rocket motor assembly of claim 9, wherein said shell (40) is formed by vacuum plasma spraying.

12. The rocket motor assembly of claim 9, wherein said at least one refractory metal or refractory metal alloy comprises a member selected from the group consisting of tungsten, rhenium, tantalum, and alloys thereof.

13. The racket motor assembly of claim 9, wherein said at least one refractory metal or refractory metal alloy comprises a tungsten/rhenium alloy.

14. The rocket motor assembly of claim 9, wherein said shell (40) has a thickness of from 0.1 cm to 0.3 cm.

15. The rocket motor assembly of claim 9, wherein said forward surface region (42) covers all of said converging portion (32) of said throat support (30) and said aft surface region (46) covers all of said diverging portion (36) of said throat support (30).

16. The rocket motor assembly of claim 9, wherein said protective eyelid (50) covers all of said forward surface region (42) of said shell (40).

17. A method of making a rocket motor nozzle assembly (20) having a converging-diverging pathway with a throat (22) and an exit region, said nozzle assembly being operatively engageable to a rocket motor case (12) to receive high temperature combustion products generated in the rocket motor case upon ignition of propellant (14) loaded in the rocket motor case and to pass the combustion products through the throat before the combustion products are discharged from said exit region, said method comprising:
(A) forming an annular shell (40) by plasma spraying at least one refractory metal or refractory metal alloy; and
(B) forming a rocket motor nozzle comprising:
(i) an annular throat insert comprising an annular throat support (30) and the shell, the throat support comprising at least one carbon-based material and having a forward face or edge (34), a radially inner converging portion (32) that converges into a minimum cross-sectional area portion at the throat, and a radially inner diverging portion (36) aft of the minimum cross-sectional area portion;
(ii) the shell positioned radially inside the throat support and comprising:
(a) a forward surface region (42) covering at least a portion of the converging portion of the throat support;
(b) the throat surface region (44) covering the minimum cross-sectional area portion of the throat support, the throat surface region defining the throat and exposed along the converging diverging pathway; and
(c) an aft surface region (46) covering at least a portion of the diverging portion of the throat support;
(iii) a protective eyelid (50) comprising at least one member selected from the group consisting of a carbon-based material and a silica-based material, the protective eyelid covering a sufficient portion of the forward surface region of the shell to insulate the shell and cover the forward face or edge of the throat support to prevent the combustion products passing along the converging-diverging pathway from reaching a radially outer surface of the throat insert, yet the protective eyelid not covering the throat surface region of the shell so that the throat surface region of the shell remains exposed to the combustion products passing along the converging-diverging pathway during operation of a rocket motor assembly associated in use with the rocket motor nozzle assembly; and
(iv) an aft skirt (28) configured as a diverging truncated cone, the aft skirt extending aftwardly from the throat insert.

18. The method of claim 17, wherein the refractory metal or refractory metal alloy has a melting temperature above 2760°C.

19. The method of claim 17, wherein said at least one refractory metal or refractory metal alloy comprises a member selected from the group consisting of tungsten, rhenium, tantalum, and alloys thereof.

20. The method of claim 17, wherein said at least one refractory metal or refractory metal alloy comprises a tungsten/rhenium alloy.

21. The method of claim 17, wherein said shell has a thickness of from 0.1 cm to 0.3 cm.

22. The method of claim 17, wherein said forward surface region (42) covers all of said converging portion (32) of said throat support (30) and said aft surface region (46) covers all of said diverging portion (36) of said throat support.

23. The method of claim 17, wherein said protective eyelid (50) covers of all said forward surface region (42) of said shell (40).

24. A method as claimed in any of claims 17 to 23 wherein said plasma spraying comprises vacuum plasma spraying.

## Patentansprüche

1. Düsenvorrichtung (20), welche einen zusammenlaufenden/auseinanderlaufenden Durchgang mit einer Engstelle (22) und einen Austrittsbereich besitzt, wobei die Düsenvorrichtung funktionell mit einem Raketenmotorgehäuse (12) in Eingriff bringbar ist, um Hochtemperaturverbrennungsprodukte aufzunehmen, welche im Raketenmotorgehäuse infolge der Zündung eines Treibstoffs (14) erzeugt werden, welcher in das Raketenmotorgehäuse eingebracht worden ist, und um die Verbrennungsprodukte durch die Engstelle durchzuleiten, bevor die Verbrennungsprodukte von dem Austrittsbereich ausgestoßen werden, wobei die Düsenvorrichtung umfasst:
(i) einen ringförmigen Engstelleneinsatz, welcher einen ringförmigen Engstellenträger (30) und eine ringförmige Hülle (40), welche innerhalb des Engstellenträgers radial angeordnet ist, umfasst, wobei der Engstellenträger mindestens ein Kohlenstoff-basiertes Material umfasst und eine Vorderfläche oder Vorderkante (34), einen innen radial zusammenlaufenden Abschnitt (32), welcher zu einem minimalen Querschnittsflächenabschnitt an der Engstelle zusammenläuft, und hinter dem minimalen Querschnittsflächenabschnitt einen innen radial auseinanderlaufenden Abschnitt (36) besitzt;
(ii) die Hülle, welche mindestens ein feuerfestes Metall oder eine feuerfeste Metalllegierung umfasst, besitzt
(a) einen vorderen Oberflächenbereich (42), welcher mindestens einen Abschnitt des zusammenlaufenden Abschnitts des Engstellenträgers abdeckt;
(b) einen Engstellenoberflächenbereich (44), welcher den minimalen Querschnittsflächenabschnitt des Engstellenträgers abdeckt, wobei der Engstellenoberflächenbereich die Engstelle definiert und entlang des zusammenlaufenden/auseinanderlaufenden Durchgangs freiliegt; und
(c) einen hinteren Oberflächenbereich (46), welcher mindestens einen Abschnitt des auseinanderlaufenden Abschnitts des Engstellenträgers abdeckt;
(iii) ein Schutzaugenlid (50), welches mindestens ein Teil umfasst, welches aus der aus einem Kohlenstoff-basierten Material und einem Siliziumdioxid-basierten Material bestehenden Gruppe ausgewählt ist, wobei das Schutzaugenlid die Vorderfläche oder Vorderkante des Engstellenträgers abdeckt, um zu verhindern, dass die Verbrennungsprodukte, welche entlang des zusammenlaufenden/auseinanderlaufenden Durchgangs strömen, eine radial äußere Oberfläche des Engstelleneinsatzes erreichen, wobei jedoch das Schutzaugenlid den Engstellenoberflächenbereich der Hülle nicht abdeckt, so dass der Engstellenoberflächenbereich der Hülle den Verbrennungsprodukten ausgesetzt bleibt, die während des Betriebs einer Raketenmotorvorrichtung, welche im Betrieb der Düsenvorrichtung zugeordnet ist, entlang des zusammenlaufenden/auseinanderlaufenden Durchgangs strömen; und
(iv) eine hintere Einfassung (28), welche als ein auseinanderlaufender Kegelstumpf ausgestaltet ist, wobei die hintere Einfassung von dem Engstelleneinsatz aus nach hinten verläuft.

2. Düsenvorrichtung nach Anspruch 1,
wobei das feuerfeste Metall oder die feuerfeste Metalllegierung eine Schmelztemperatur von über 2760°C besitzt.

3. Düsenvorrichtung nach Anspruch 1,
wobei die Hülle (40) durch ein Vakuumplasmaspritzverfahren ausgebildet ist.

4. Düsenvorrichtung nach Anspruch 1,
wobei das mindestens eine feuerfeste Metall oder die mindestens eine feuerfeste Metalllegierung eine Komponente umfasst, welche aus der aus Wolfram, Rhenium, Tantal oder einer Legierung davon bestehenden Gruppe ausgewählt ist.

5. Düsenvorrichtung nach Anspruch 1,
wobei das mindestens eine feuerfeste Metall oder die mindestens eine feuerfeste Metalllegierung eine Wolfram-Rheniumlegierung umfasst.

6. Düsenvorrichtung nach Anspruch 1,
wobei die Hülle (40) eine Dicke von 0,1 cm bis 0,3 cm besitzt.

7. Düsenvorrichtung nach Anspruch 1,
wobei der vordere Oberflächenbereich (42) den zusammenlaufenden Abschnitt (32) des Engstellenträgers (30) vollständig abdeckt und der hintere Oberflächenbereich (46) den auseinanderlaufenden Abschnitt (36) des Engstellenträgers (30) vollständig abdeckt.

8. Düsenvorrichtung nach Anspruch 1,
wobei das Schutzaugenlid (50) den vorderen Oberflächenbereich (42) der Hülle (40) vollständig abdeckt.

9. Raketenmotorvorrichtung umfassend:
(A) ein Raketenmotorgehäuse (12), welches eine Verbrennungskammer und mindestens einen Treibstoff (14), welcher zündfähig ist, um Hochtemperaturverbrennungsprodukte zu erzeugen, umfasst; und
(B) eine Düsenvorrichtung (20), welche einen zusammenlaufenden/auseinanderlaufenden Durchgang mit einer Engstelle (22) und einen Austrittsbereich besitzt, wobei die Düsenvorrichtung funktionell mit dem Raketenmotorgehäuse in Eingriff bringbar ist, um die von dem Treibstoff erzeugten Verbrennungsprodukte aufzunehmen und die Verbrennungsprodukte durch den zusammenlaufenden/auseinanderlaufenden Durchgang durchzuleiten, bevor die Verbrennungsprodukte von dem Austrittsbereich für den Vortrieb ausgestoßen werden und/oder von der Raketenmotorvorrichtung abgeleitet werden, wobei die Düsenvorrichtung umfasst:
(i) einen ringförmigen Engstelleneinsatz, welcher einen ringförmigen Engstellenträger (30) und eine ringförmige Hülle (40), welche innerhalb des Engstellenträgers radial angeordnet ist, umfasst, wobei der Träger mindestens ein Kohlenstoff-basiertes Material umfasst und eine Vorderfläche oder Vorderkante (34), einen innen radial zusammenlaufenden Abschnitt (32), welcher zu einem minimalen Querschnittsflächenabschnitt an der Engstelle zusammenläuft, und hinter dem minimalen Querschnittsflächenabschnitt einen innen radial auseinanderlaufenden Abschnitt (36) besitzt;
(ii) die ringförmige Hülle, welche mindestens ein feuerfestes Metall oder eine feuerfeste Metalllegierung umfasst, umfasst:
(a) einen vorderen Oberflächenbereich (42), welcher mindestens einen Abschnitt des zusammenlaufenden Abschnitts des Engstellenträgers abdeckt;
(b) einen Engstellenoberflächenbereich (44), welcher den minimalen Querschnittsflächenabschnitt des Engstellenträgers abdeckt, wobei der Engstellenoberflächenbereich die Engstelle definiert und entlang des zusammenlaufenden/auseinanderlaufenden Durchgangs freiliegt; und
(c) einen hinteren Oberflächenbereich (46), welcher mindestens einen Abschnitt des auseinanderlaufenden Abschnitts des Engstellenträgers abdeckt;
(iii) ein Schutzaugenlid (50), welches mindestens ein Teil umfasst, welches aus der aus einem Kohlenstoff-basierten Material und einem Siliziumdioxid-basierten Material bestehenden Gruppe ausgewählt ist, wobei das Schutzaugenlid einen ausreichenden Abschnitt des vorderen Oberflächenbereichs der Hülle abdeckt, um die Hülle zu isolieren und zu verhindern, dass die Verbrennungsprodukte, welche entlang des zusammenlaufenden/auseinanderlaufenden Durchgangs strömen, eine radial äußere Oberfläche des Engstelleneinsatzes erreichen, wobei jedoch das Schutzaugenlid den Engstellenoberflächenbereich der Hülle nicht abdeckt, so dass der Engstellenoberflächenbereich der Hülle den Verbrennungsprodukten ausgesetzt bleibt, die während des Betriebs der Raketenmotorvorrichtung entlang des zusammenlaufenden/auseinanderlaufenden Durchgangs strömen; und
(iv) eine hintere Einfassung (28), welche als ein auseinanderlaufender Kegelstumpf ausgestaltet ist, wobei die hintere Einfassung von dem Engstelleneinsatz aus nach hinten verläuft.

10. Raketenmotorvorrichtung nach Anspruch 9,
wobei das feuerfeste Metall oder die feuerfeste Metalllegierung eine Schmelztemperatur von über 2760°C besitzen.

11. Raketenmotorvorrichtung nach Anspruch 9,
wobei die Hülle (40) mit einem Vakuumplasmaspritzverfahren ausgebildet ist.

12. Raketenmotorvorrichtung nach Anspruch 9,
wobei das mindestens eine feuerfeste Metall oder die mindestens eine feuerfeste Metalllegierung eine Komponente umfasst, welche aus der aus Wolfram, Rhenium, Tantal oder einer Legierung davon bestehenden Gruppe ausgewählt ist.

13. Raketenmotorvorrichtung nach Anspruch 9,
wobei das mindestens eine feuerfeste Metall oder die mindestens eine feuerfeste Metalllegierung eine Wolfram-Rheniumlegierung umfasst.

14. Raketenmotorvorrichtung nach Anspruch 9,
wobei die Hülle (40) eine Dicke von 0,1 cm bis 0,3 cm besitzt.

15. Raketenmotorvorrichtung nach Anspruch 9,
wobei der vordere Oberflächenbereich (42) den zusammenlaufenden Abschnitt (32) des Engstellenträgers (30) vollständig abdeckt und der hintere Oberflächenbereich (46) den auseinanderlaufenden Abschnitt (36) des Engstellenträgers (30) vollständig abdeckt.

16. Raketenmotorvorrichtung nach Anspruch 9,
wobei das Schutzaugenlid (50) den vorderen Oberflächenbereich (42) der Hülle (40) vollständig abdeckt.

17. Verfahren zur Herstellung einer Raketenmotordüsenvorrichtung (20), welche einen zusammenlaufenden-auseinanderlaufenden Durchgang mit einer Engstelle (22) und einen Austrittsbereich besitzt, wobei die Düsenvorrichtung funktionell mit einem Raketenmotorgehäuse (12) in Eingriff bringbar ist, um Hochtemperaturverbrennungsprodukte aufzunehmen, welche in dem Raketenmotorgehäuse infolge der Zündung eines Treibstoffs (14) erzeugt werden, welcher in das Raketenmotorgehäuse eingebracht worden ist, und um die Verbrennungsprodukte durch die Engstelle durchzuleiten, bevor die Verbrennungsprodukte von dem Austrittsbereich ausgestoßen werden, wobei das Verfahren umfasst:
(A) Bilden einer ringförmigen Hülle (40) durch ein Plasmaspritzverfahren mit wenigstens einem feuerfesten Metall oder einer feuerfesten Metalllegierung; und
(B) Bilden einer Raketenmotordüse umfassend:
(i) einen ringförmigen Engstelleneinsatz, welcher einen ringsförmigen Engstellenträger (30) und die Hülle umfasst, wobei der Engstellenträger mindestens ein Kohlenstoff-basiertes Material umfasst und eine Vorderfläche oder Vorderkante (34), einen innen radial zusammenlaufenden Abschnitt (32), welcher zu einem minimalen Querschnittsflächenabschnitt an der Engstelle zusammenläuft, und hinter dem minimalen Querschnittsflächenabschnitt einen innen radial auseinanderlaufenden Abschnitt (36) besitzt;
(ii) die Hülle, welche innerhalb der Engstelle radial angeordnet ist, umfasst:
(a) einen vorderen Oberflächenbereich (42), welcher mindestens einen Abschnitt des zusammenlaufenden Abschnitts des Engstellenträgers abdeckt;
(b) einen Engstellenoberflächenbereich (44), welcher den minimalen Querschnittsflächenabschnitt des Engstellenträgers abdeckt, wobei der Engstellenoberflächenbereich die Engstelle definiert und entlang des zusammenlaufenden/auseinanderlaufenden Durchgangs freiliegt; und
(c) einen hinteren Oberflächenbereich (46), welcher mindestens einen Abschnitt des auseinanderlaufenden Abschnitts des Engstellenträgers abdeckt;
(iii) ein Schutzaugenlid (50), welches mindestens ein Teil umfasst, welches aus der aus einem Kohlenstoff-basierten Material und einem Siliziumdioxid-basierten Material bestehenden Gruppe ausgewählt ist, wobei das Schutzaugenlid einen ausreichenden Abschnitt des vorderen Oberflächenbereichs der Hülle abdeckt, um die Hülle zu isolieren und die Vorderfläche oder Vorderkante des Engstellenträgers abzudecken, um zu verhindern, dass die Verbrennungsprodukte, welche entlang des zusammenlaufenden-auseinanderlaufenden Durchgangs strömen, eine radial äußere Oberfläche des Engstelleneinsatzes erreichen, wobei jedoch das Schutzaugenlid den Engstellenoberflächenbereich der Hülle nicht abdeckt, so dass der Engstellenoberflächenbereich der Hülle den Verbrennungsprodukten ausgesetzt bleibt, die während des Betriebs einer Raketenmotorvorrichtung, welche im Betrieb der Raketenmotordüsenvorrichtung zugeordnet ist, entlang des zusammenlaufenden-auseinanderlaufenden Durchgangs strömen; und
(iv) eine hintere Einfassung (28), welche als ein auseinanderlaufender Kegelstumpf ausgestaltet ist, wobei die hintere Einfassung von dem Engstelleneinsatz aus nach hinten verläuft.

18. Verfahren nach Anspruch 17,
wobei das feuerfeste Metall oder die feuerfeste Metalllegierung eine Schmelztemperatur von über 2760°C besitzt.

19. Verfahren nach Anspruch 17,
wobei das mindestens eine feuerfeste Metall oder die mindestens eine feuerfeste Metalllegierung eine Komponente umfasst, welche aus der aus Wolfram, Rhenium, Tantal und einer Legierung davon bestehenden Gruppe ausgewählt ist.

20. Verfahren nach Anspruch 17,
wobei das mindestens eine feuerfeste Metall oder die mindestens eine feuerfeste Metalllegierung eine Wolfram-Rheniumlegierung umfasst.

21. Verfahren nach Anspruch 17,
wobei die Hülle eine Dicke von 0,1 cm bis 0,3 cm besitzt.

22. Verfahren nach Anspruch 17,
wobei der vordere Oberflächenbereich (42) den zusammenlaufenden Abschnitt (32) des Engstellenträgers (30) vollständig abdeckt und der hintere Oberflächenbereich (46) den auseinanderlaufenden Abschnitt (36) des Engstellenträgers vollständig abdeckt.

23. Verfahren nach Anspruch 17,
wobei das Schutzaugenlid (50) den vorderen Oberflächenbereich (42) der Hülle (40) vollständig abdeckt.

24. Verfahren nach einem der Ansprüche 17-23,
wobei das Plasmaspritzverfahren ein Vakuumplasmaspritzverfahren umfasst.

## Revendications

1. Ensemble de tuyère (20) ayant un trajet convergent/divergent avec un col (22) et une région de sortie, ledit ensemble de tuyère pouvant être mis en prise de manière opérationnelle avec un carter de moteur de fusée (12) pour recevoir des produits de combustion à température élevée générés dans le carter de moteur de fusée lors de l'allumage d'un agent propulsif (14) chargé dans le carter de moteur de fusée et pour faire passer les produits de combustion à travers le col avant que les produits de combustion soient déchargés depuis ladite région de sortie, ledit ensemble de tuyère comprenant :
(i) une insertion de col annulaire comprenant un support de col annulaire (30) et une gaine annulaire (40) positionnée radialement à l'intérieur dudit support de col, ledit support de col comprenant au moins un matériau à base de carbone et ayant une face ou bord avant (34), une partie radialement convergente interne (32) qui converge dans une partie d'aire de section transversale minimale au niveau dudit col, et une partie radialement divergente interne (36) à l'arrière de ladite partie d'aire de section transversale minimale ;
(ii) ladite gaine comprenant au moins un métal réfractaire ou alliage de métal réfractaire ayant :
(a) une région de surface avant (42) recouvrant au moins une partie de ladite partie convergente dudit support de col ;
(b) une région de surface de col (44) recouvrant ladite partie d'aire de section transversale minimale dudit support de col, ladite région de surface de col définissant ledit col et étant exposée le long dudit trajet convergent/divergent ; et
(c) une région de surface arrière (46) recouvrant au moins une partie de ladite partie divergente dudit support de col ;
(iii) une coquille protectrice (50) comprenant au moins un élément choisi dans le groupe consistant en un matériau à base de carbone et un matériau à base de silice, ladite coquille protectrice recouvrant ladite face ou bord avant dudit support de col pour empêcher les produits de combustion passant le long du trajet convergent/divergent d'atteindre une surface radialement externe de ladite insertion de col, ladite coquille protectrice ne recouvrant cependant pas ladite région de surface de col de ladite gaine de sorte que ladite région de surface de col de ladite gaine reste exposée aux produits de combustion passant le long du trajet convergent/divergent durant le fonctionnement d'un ensemble de moteur de fusée associé en utilisation à l'ensemble de tuyère ; et
(iv) une jupe arrière (28) configurée sous forme de cône tronqué divergent, ladite jupe arrière s'étendant vers l'arrière depuis ladite insertion de col.

2. Ensemble de tuyère selon la revendication 1, dans lequel le métal réfractaire ou alliage de métal réfractaire a une température de fusion supérieure à 2760°C.

3. Ensemble de tuyère selon la revendication 1, dans lequel ladite gaine (40) est formée par pulvérisation au plasma sous vide.

4. Ensemble de tuyère selon la revendication 1, dans lequel ledit au moins un métal réfractaire ou alliage de métal réfractaire comprend un élément choisi dans le groupe consistant en le tungstène, le rhénium, le tantale et des alliages de ceux-ci.

5. Ensemble de tuyère selon la revendication 1, dans lequel ledit au moins un métal réfractaire ou alliage de métal réfractaire comprend un alliage tungstène/rhénium.

6. Ensemble de tuyère selon la revendication 1, dans lequel ladite gaine (40) a une épaisseur de 0,1 cm à 0,3 cm.

7. Ensemble de tuyère selon la revendication 1, dans lequel ladite région de surface avant (42) recouvre toute ladite partie convergente (32) dudit support de col (30) et ladite région de surface arrière (46) recouvre toute ladite partie divergente (36) dudit support de col (30).

8. Ensemble de tuyère selon la revendication 1, dans lequel ladite coquille protectrice (50) recouvre toute ladite région de surface avant (42) de ladite gaine (40).

9. Ensemble de moteur de fusée comprenant :
(A) un carter de moteur de fusée (12) comprenant une chambre de combustion et au moins un agent propulsif (14) qui est inflammable pour générer des produits de combustion à température élevée ;
et
(B) un ensemble de tuyère (20) ayant un trajet convergent/divergent avec un col (22) et une région de sortie, ledit ensemble de tuyère pouvant être mis en prise de manière opérationnelle avec ledit carter de moteur de fusée pour recevoir les produits de combustion générés à partir de l'agent propulsif et pour faire passer les produits de combustion à travers le trajet convergent/divergent avant que les produits de combustion soient déchargés depuis ladite région de sortie pour propulser et/ou détourner ledit ensemble de moteur de fusée, ledit ensemble de tuyère comprenant :
(i) une insertion de col annulaire comprenant un support de col annulaire (30) et une gaine annulaire (40) positionnée radialement à l'intérieur dudit support de col, ledit support comprenant au moins un matériau à base de carbone et ayant une face ou bord avant (34), une partie radialement convergente interne (32) qui converge dans une partie d'aire de section transversale minimale au niveau dudit col, et une partie radialement divergente interne (36) à l'arrière de ladite partie d'aire de section transversale minimale ;
(ii) ladite gaine annulaire comprenant au moins un métal réfractaire ou alliage de métal réfractaire et comprenant :
(a) une région de surface avant (42) recouvrant au moins une partie de ladite partie convergente dudit support de col ;
(b) ladite région de surface de col (44) recouvrant ladite partie d'aire de section transversale minimale dudit support de col, ladite région de surface de col définissant ledit col et étant exposée le long dudit trajet convergent/divergent ; et
(c) une région de surface arrière (46) recouvrant au moins une partie de ladite partie divergente dudit support de col ;
(iii) une coquille protectrice (50) comprenant au moins un élément choisi dans le groupe consistant en un matériau à base de carbone et un matériau à base de silice, ladite coquille protectrice recouvrant une partie suffisante de ladite région de surface avant de ladite gaine pour isoler ladite gaine et empêcher les produits de combustion passant le long du trajet convergent/divergent d'atteindre une surface radialement externe de ladite insertion de col, ladite coquille protectrice ne recouvrant cependant pas ladite région de surface de col de ladite gaine de sorte que ladite région de surface de col de ladite gaine reste exposée aux produits de combustion passant le long du trajet convergent/divergent durant le fonctionnement de l'ensemble de moteur de fusée ; et
(iv) une jupe arrière (28) configurée sous forme de cône tronqué divergent, ladite jupe arrière s'étendant vers l'arrière depuis ladite insertion de col.

10. Ensemble de moteur de fusée selon la revendication 9, dans lequel le métal réfractaire ou alliage de métal réfractaire ait une température de fusion supérieure à 2760°C.

11. Ensemble de moteur de fusée selon la revendication 9, dans lequel ladite gaine (40) est formée par pulvérisation au plasma sous vide.

12. Ensemble de moteur de fusée selon la revendication 9, dans lequel ledit au moins un métal réfractaire ou alliage de métal réfractaire comprend un élément choisi dans le groupe consistant en le tungstène, le rhénium, le tantale et des alliages de ceux-ci.

13. Ensemble de moteur de fusée selon la revendication 9, dans lequel ledit au moins un métal réfractaire ou alliage de métal réfractaire comprend un alliage tungstène/rhénium.

14. Ensemble de moteur de fusée selon la revendication 9, dans lequel ladite gaine (40) a une épaisseur de 0,1 cm à 0,3 cm.

15. Ensemble de moteur de fusée selon la revendication 9, dans lequel ladite région de surface avant (42) recouvre toute ladite partie convergente (32) dudit support de col (30) et ladite région de surface arrière (46) recouvre toute ladite partie divergente (36) dudit support de col (30).

16. Ensemble de moteur de fusée selon la revendication 9, dans lequel ladite coquille protectrice (50) recouvre toute ladite région de surface avant (42) de ladite gaine (40).

17. Procédé de fabrication d'un ensemble de tuyère de moteur de fusée (20) ayant un trajet convergent/divergent avec un col (22) et une région de sortie, ledit ensemble de tuyère pouvant être mis en prise de manière opérationnelle avec un carter de moteur de fusée (12) pour recevoir des produits de combustion à température élevée générés dans le carter de moteur de fusée lors de l'allumage d'un agent propulsif (14) chargé dans le carter de moteur de fusée et pour faire passer les produits de combustion à travers le col avant que les produits de combustion soient déchargés depuis ladite région de sortie, ledit procédé comprenant :
(A) la formation d'une gaine annulaire (40) par pulvérisation au plasma d'au moins un métal réfractaire ou alliage de métal réfractaire ; et
(B) la formation d'une tuyère de moteur de fusée comprenant :
(i) une insertion de col annulaire comprenant un support de col annulaire (30) et la gaine, le support de col comprenant au moins un matériau à base de carbone et ayant une face ou bord avant (34), une partie radialement convergente interne (32) qui converge dans une partie d'aire de section transversale minimale au niveau du col, et une partie radialement divergente interne (36) à l'arrière de la partie d'aire de section transversale minimale ;
(ii) la gaine positionnée radialement à l'intérieur du support de col et comprenant :
(a) une région de surface avant (42) recouvrant au moins une partie de la partie convergente du support de col ;
(b) la région de surface de col (44) recouvrant la partie d'aire de section transversale minimale du support de col, la région de surface de col définissant le col et étant exposée le long du trajet convergent/divergent ; et
(c) une région de surface arrière (46) recouvrant au moins une partie de la partie divergente du support de col ;
(iii) une coquille protectrice (50) comprenant au moins un élément choisi dans le groupe consistant en un matériau à base de carbone et un matériau à base de silice, la coquille protectrice recouvrant une partie suffisante de la région de surface avant de la gaine pour isoler la gaine et recouvrir la face ou bord avant du support de col pour empêcher les produits de combustion passant le long du trajet convergent-divergent d'atteindre une surface radialement externe de l'insertion de col, la coquille protectrice ne recouvrant cependant pas la région de surface de col de la gaine de sorte que la région de surface de col de la gaine reste exposée aux produits de combustion passant le long du trajet convergent/divergent durant le fonctionnement d'un ensemble de moteur de fusée associé en utilisation à l'ensemble de tuyère de moteur de fusée ; et
(iv) une jupe arrière (28) configurée sous forme de cône tronqué divergent, la jupe arrière s'étendant vers l'arrière depuis l'insertion de col.

18. Procédé selon la revendication 17, dans lequel le métal réfractaire ou alliage de métal réfractaire a une température de fusion supérieure à 2760°C.

19. Procédé selon la revendication 17, dans lequel ledit au moins un métal réfractaire ou alliage de métal réfractaire comprend un élément choisi dans le groupe consistant en le tungstène, le rhénium, le tantale et des alliages de ceux-ci.

20. Procédé selon la revendication 17, dans lequel ledit au moins un métal réfractaire ou alliage de métal réfractaire comprend un alliage tungstène/rhénium.

21. Procédé selon la revendication 17, dans lequel ladite gaine a une épaisseur de 0,1 cm à 0,3 cm.

22. Procédé selon la revendication 17, dans lequel ladite région de surface avant (42) recouvre toute ladite partie convergente (32) dudit support de col (30) et ladite région de surface arrière (46) recouvre toute ladite partie divergente (36) dudit support de col.

23. Procédé selon la revendication 17, dans lequel ladite coquille protectrice (50) recouvre toute ladite région de surface avant (42) de ladite gaine (40).

24. Procédé selon l'une quelconque des revendications 17 à 23, dans lequel ladite pulvérisation au plasma comprend la pulvérisation au plasma sous vide.
